# EUROPEAN PATENT APPLICATION

(11) **EP 4 468 509 A1**
(43) Date of publication of application: **27.11.2024**
(21) Application number: 23740370.4
(22) Date of filing: 17.01.2023
(51) Int. Cl.: H01M 50/578

(54) **BATTERY AND METHOD FOR MANUFACTURING BATTERY**

(30) Priority: 17.01.2022 JP 2022005355
(71) Applicant: Vehicle Energy Japan Inc., Ibaraki 312-8505 (JP)
(72) Inventor: EGAWA, Hiroaki, Hitachinaka-shi, Ibaraki 312-8505 (JP)
(74) Representative: Mewburn Ellis LLP
(86) International application number: PCT/JP2023/001235
(87) International publication number: WO 2023/136362

(57) **Abstract**

A battery (1) in which a current interrupt device (diaphragm (31)) can be actuated by appropriate actuation pressure is provided. The battery (1) includes a charge/discharge body (10), a current collection member (20) (positive electrode current collection plate (21)) electrically coupled to the charge/discharge body (10), a current interrupt device (diaphragm (31)) stacked and joined with the positive electrode current collection plate (21), an external terminal (positive electrode terminal (41)) electrically coupled to the diaphragm (31), a supporting table (33) supporting the diaphragm (31) in a stacking direction (Z-axis direction) of the positive electrode current collection plate (21) and the diaphragm (31), and a low-stiffness member (projection (33e)) arranged alongside the supporting table (33) in the Z-axis direction and having stiffness lower than stiffness of the supporting table (33).

## Description

### [Technical Field]

The present invention relates to a battery and a manufacturing method for a battery.

### [Background Art]

Conventionally, a current interrupt device (CID) configured to physically open and interrupt a current path of a battery when internal pressure of the battery rises has been known (refer to Patent Document 1, for example).

### [Citation List]

### [Patent Literature]

[Patent Literature 1] Japanese Patent Laid-open No. 2020-155200

### [Summary of Invention]

### [Technical Problem]

It is demanded to actuate a current interrupt device with appropriate actuation pressure.

### [Solution to Problem]

A battery of the present invention includes a charge/discharge body, a current collection member electrically coupled to the charge/discharge body, a current interrupt device stacked and joined with the current collection member, an external terminal electrically coupled to the current interrupt device, a support member supporting the current interrupt device in a stacking direction of the current collection member and the current interrupt device, and a low-stiffness member arranged alongside the support member in the stacking direction and having stiffness lower than stiffness of the support member.

A battery manufacturing method of the present invention is a manufacturing method for the battery. The battery manufacturing method of the present invention includes a first step of measuring distance between the current collection member and the current interrupt device in the stacking direction, a second step of bringing the support member and the current collection member relatively close to each other in the stacking direction and pressing the low-stiffness member and the current collection member simultaneously with the first step or after the first step, and a third step of joining the current collection member and the current interrupt device in contact with each other after the second step.

### [Advantageous Effects of Invention]

With a battery of the present invention, it is possible to actuate a current interrupt device with appropriate actuation pressure. With a battery manufacturing method of the present invention, it is possible to improve productivity of a battery including a current interrupt device.

### [Brief Description of Drawings]

[Figure 1] Figure 1 is a perspective view showing a battery 1 in a first embodiment.
[Figure 2] Figure 2 is a sectional perspective view showing a periphery of a negative electrode terminal 42 of the battery 1 in the first embodiment.
[Figure 3] Figure 3 is a cross-sectional view showing the periphery of the negative electrode terminal 42 of the battery 1 in the first embodiment.
[Figure 4] Figure 4 is a sectional perspective view showing a periphery of a positive electrode terminal 41 of the battery 1 in the first embodiment.
[Figure 5] Figure 5 is a cross-sectional view showing the periphery of the positive electrode terminal 41 of the battery 1 in the first embodiment.
[Figure 6] Figure 6 is an exploded perspective view showing the battery 1 in the first embodiment.
[Figure 7] Figure 7 is a perspective view showing a charge/discharge body 10 of the battery 1 in the first embodiment.
[Figure 8] Figure 8 is a cross-sectional view showing a part of the charge/discharge body 10 of the battery 1 in the first embodiment.
[Figure 9] Figure 9 is a cross-sectional view showing a part of a charge/discharge body 110 of a modification of the battery 1 in the first embodiment.
[Figure 10] Figure 10 is an exploded perspective view showing the periphery of the negative electrode terminal 42 of the battery 1 in the first embodiment.
[Figure 11] Figure 11 is an exploded perspective view showing a lid 52 and a sealing plug 53 of the battery 1 in the first embodiment.
[Figure 12] Figure 12 is an exploded perspective view showing the periphery of the positive electrode terminal 41 of the battery 1 in the first embodiment.
[Figure 13] Figure 13 is an exploded perspective view showing constituent members of around a current interrupter 30 of the battery 1 in the first embodiment.
[Figure 14] Figure 14 is a perspective view showing the constituent members in Figure 13 from a back surface side.
[Figure 15] Figure 15 is a side view showing a section of constituent members such as the current interrupter 30 of the battery 1 in the first embodiment in a manufacturing method related to the current interrupter 30.
[Figure 16] Figure 16 is a side view showing a section of a state that follows the state illustrated Figure 15 and in which a distance between the positive electrode current collection plate 21 and a diaphragm 31 is measured in a Z-axis direction after a positive electrode current collection plate 21 and a supporting table 33 are moved toward an electrical connection member 32 side.
[Figure 17] Figure 17 is a side view showing a section of a state that follows the state illustrated Figure 16 and in which the positive electrode current collection plate 21 and the diaphragm 31 are brought into contact by further moving the positive electrode current collection plate 21 toward the electrical connection member 32 side while plastically deforming a projection 33e of the supporting table 33.
[Figure 18] Figure 18 is a side view showing a section of a state that follows the state illustrated Figure 17 and in which the positive electrode current collection plate 21 and the supporting table 33 are welded and the positive electrode current collection plate 21 and the diaphragm 31 are laser-welded.
[Figure 19] Figure 19 is a side view showing a section of a main part of the manufacturing method related to the current interrupter 30 of the battery 1 in the first embodiment.
[Figure 20] Figure 20 is a side view showing a section of a main part of a manufacturing method related to a current interrupter 130 of a battery 2 in a second embodiment.
[Figure 21] Figure 21 is a side view showing a section of a main part of a manufacturing method related to a current interrupter 230 of a battery 3 in a third embodiment.
[Figure 22] Figure 22 is a side view showing a section of a main part of a manufacturing method related to a current interrupter 330 of a battery 4 in a fourth embodiment.

### [Description of Embodiments]

Each of embodiments of the present invention is explained with reference to the drawings. To facilitate understanding of each of the embodiments, sizes and ratios of constituent members are sometimes exaggerated in the drawings. In each of the embodiments, the same reference numerals and signs are given to the same components and redundant explanation of the components is omitted. In each of the embodiments, a left-handed XYZ orthogonal coordinate system in which an X axis, a Y axis, and a Z axis are set as coordinate axes is used. Arrows of the axes of the X axis, the Y axis, and the Z axis indicate positive directions of the coordinate axes. The X axis is a coordinate axis in a longitudinal direction of a rectangular parallelepiped battery. The Y axis is a coordinate axis in a latitudinal direction of the battery. The Z axis is a coordinate axis in a height direction of the battery. However, a positional relation represented by the XYZ orthogonal coordinate system is only a relative positional relation.

### [First Embodiment]

### (Configuration of battery 1 in first embodiment)

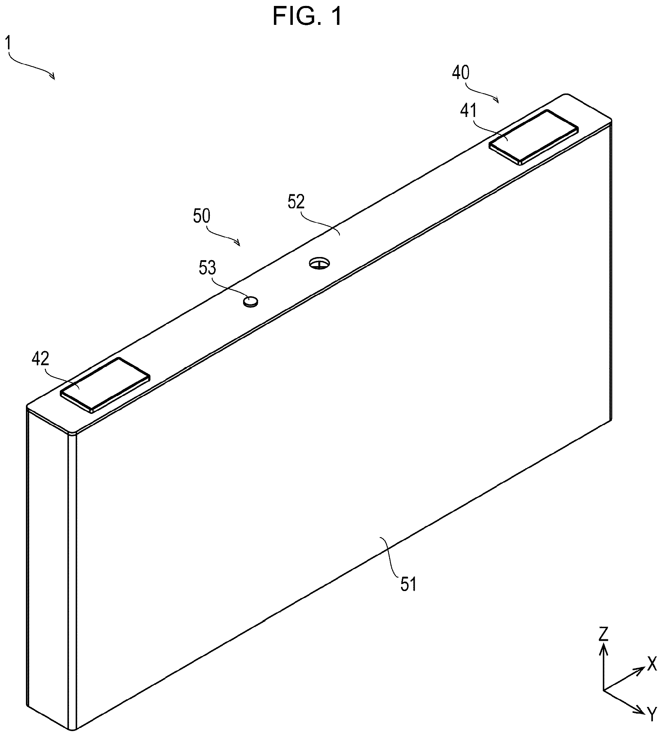

A configuration of a battery 1 is explained with reference to Figure 1 to Figure 14.

The battery 1 includes, for example, as shown in Figure 1 to Figure 5, a charge/discharge body 10 that charges and discharges electricity, a current collection member 20 coupled to the charge/discharge body 10, a current interrupter 30 coupled to the current collection member 20, an external terminal 40 coupled to the current collection member 20 or the current interrupter 30, and an exterior body 50 in or to which the constituent members of the battery 1 are housed or attached. The battery 1 includes an insulator 60 that insulates the constituent members of the battery 1 and the exterior body 50, and a sealing body 70 that seals the constituent members of the battery 1 and the exterior body 50.

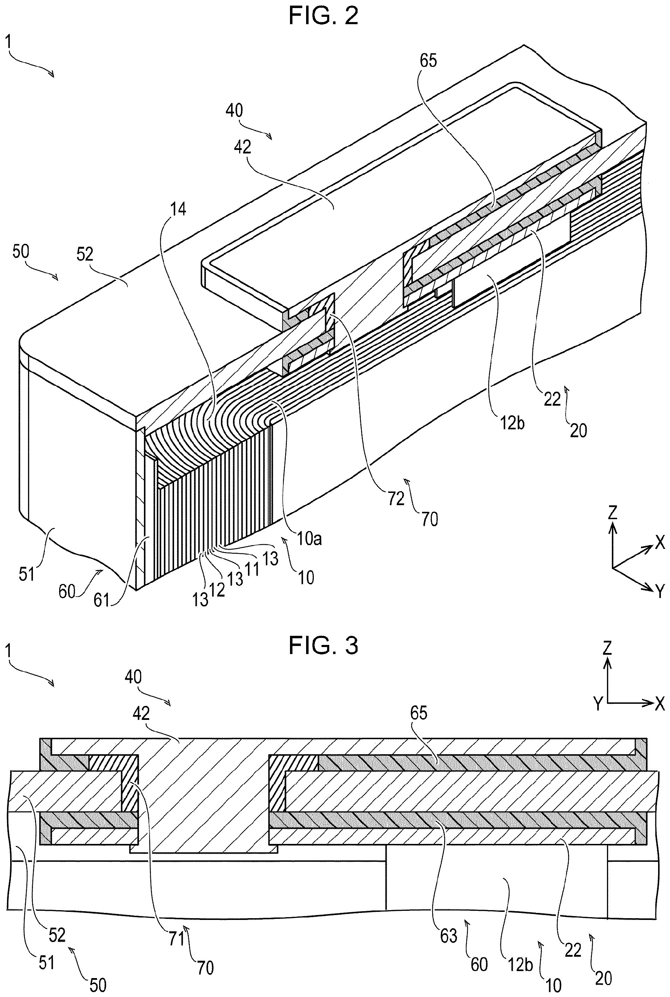

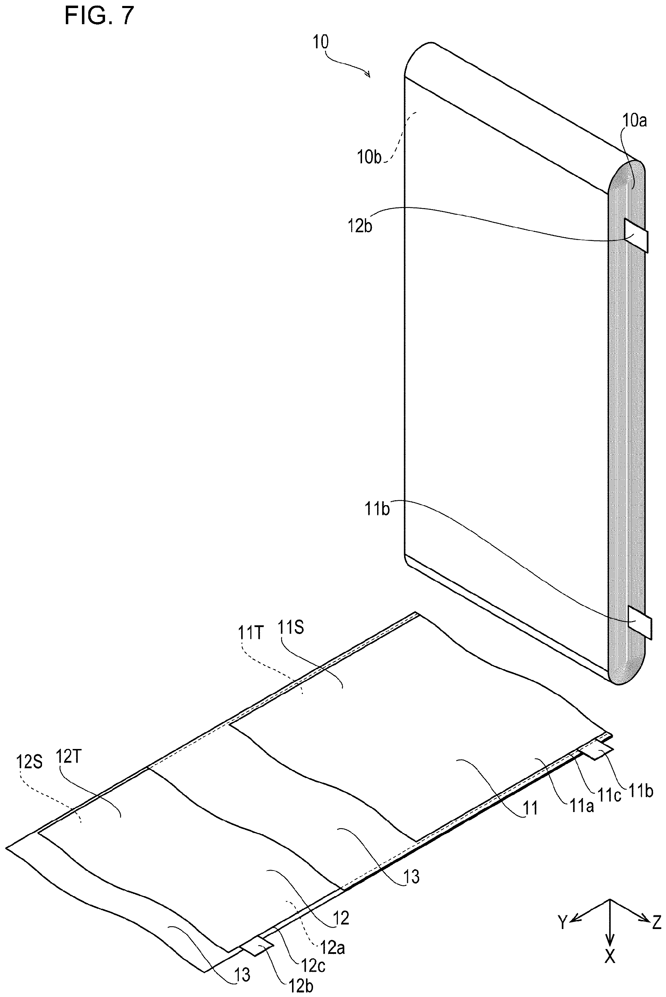

The charge/discharge body 10 charges and discharges electricity. The charge/discharge body 10 shown in Figure 2 to Figure 8 includes a positive electrode 11, a negative electrode 12, separators 13 (insulating members), and an electrolyte 14. As shown in Figure 7, the charge/discharge body 10 is configured by winding, in a rectangular parallelepiped shape, the constituent members stacked in the order of the positive electrode 11, the separators 13, the negative electrode 12, and the separators 13.

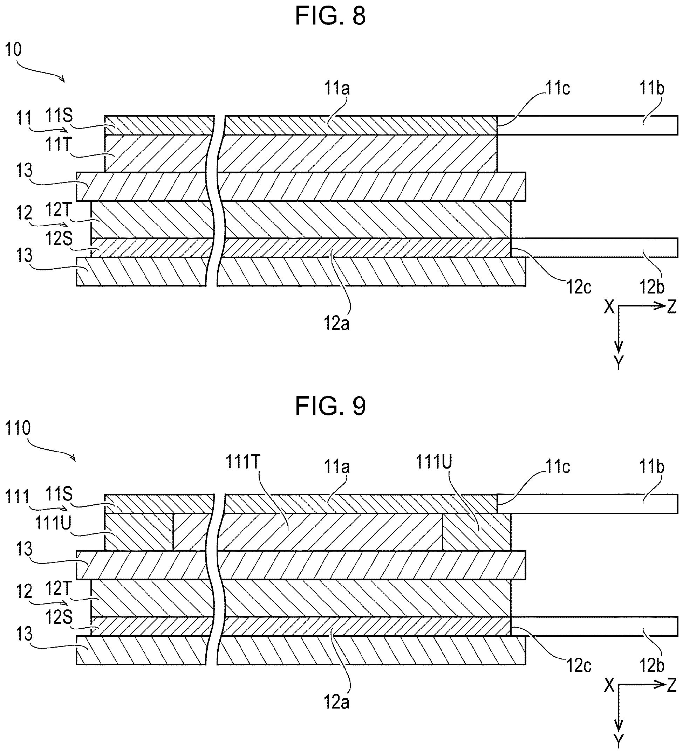

The positive electrode 11 includes, for example, as shown in Figure 7 and Figure 8, a long positive electrode current collection foil 11S and a positive electrode active material layer 11T joined to the positive electrode current collection foil 11S. The positive electrode current collection foil 11S includes a current collection section 11a and a positive electrode tab 11b. The current collection section 11a is wound. The positive electrode active material layer 11T is joined to the current collection section 11a. As shown in Figure 8, the positive electrode active material layer 11T faces, for example, the entire area extending in the latitudinal direction of the current collection section 11a (the Z-axis direction).

For example, as shown in Figure 7 and Figure 8, the positive electrode tab 11b projects in the latitudinal direction of the current collection section 11a from a side edge 11c extending in the longitudinal direction of the current collection section 11a (a winding direction). The positive electrode tab 11b is formed integrally with the current collection section 11a. For example, one positive electrode tab 11b is formed in one current collection section 11a.

The current collection section 11a of the positive electrode 11 is formed by, for example, aluminum or an aluminum alloy. The positive electrode active material layer 11T includes a positive electrode active material, a binder, a conductive auxiliary agent, and the like formed by a lithium-containing complex oxide. As the lithium-containing complex oxide, for example, a metal element such as nickel (Ni), cobalt (Co), or manganese (Mn) and lithium (Li) are used.

The negative electrode 12 includes, for example, as shown in Figure 7 and Figure 8, a long negative electrode current collection foil 12S and a negative electrode active material layer 12T joined to the negative electrode current collection foil 12S. The negative electrode current collection foil 12S includes a current collection section 12a and a negative electrode tab 12b. As shown in Figure 8, the current collection section 12a of the negative electrode 12 is longer in width in the latitudinal direction (the Z-axis direction) compared with the current collection section 11a of the positive electrode 11. Both the ends in the latitudinal direction of the current collection section 11a of the positive electrode 11 are located via the separators 13 within a range extending in the latitudinal direction of the current collection section 12a of the negative electrode 12. The negative electrode active material layer 12T is joined to the current collection section 12a. The negative electrode active material layer 12T faces, for example, the entire area extending in the latitudinal direction of the current collection section 12a (the Z-axis direction).

For example, as shown in Figure 7 and Figure 8, the negative electrode tab 12b projects in the latitudinal direction of the current collection section 12a from a side edge 12c extending in the longitudinal direction of the current collection section 12a (the winding direction). The negative electrode tab 12b projects in the same direction as the direction of the positive electrode tab 11b of the positive electrode 11 in a state in which the negative electrode tab 12b is stacked with the positive electrode 11 via the separators 13. The negative electrode tab 12b is separated from the positive electrode tab 11b of the positive electrode 11 in the state in which the negative electrode tab 12b is stacked with the positive electrode 11 via the separators 13. The negative electrode tab 12b is formed integrally with the current collection section 12a. For example, one negative electrode tab 12b is formed in one current collection section 12a.

The current collection section 12a of the negative electrode 12 is formed by, for example, copper or a copper alloy. The negative electrode active material layer 12T includes a negative electrode active material, a binder, a conductive auxiliary agent, and the like formed by a carbon-based material. As the carbon-based material, for example, graphite is used.

For example, as shown in Figure 7 and Figure 8, the separator 13 (an insulator) allows lithium ions to pass while insulating the positive electrode 11 and the negative electrode 12. The separators 13 is formed long. The separators 13 is long in width in the latitudinal direction (the Z-axis direction) compared with the current collection section 11a of the positive electrode 11 and the current collection section 12a of the negative electrode 12. Both the ends in the latitudinal direction of the current collection section 11a of the positive electrode 11 are located and both the ends in the latitudinal direction of the current collection section 12a of the negative electrode 12 are located within a range extending in the latitudinal direction of the separators 13. The separator 13 is made of a porous material. As the separator 13, polyethylene (PE) or polypropylene (PP) is used. A heat resistant insulating member may be used instead of the separator 13. As the heat resistant insulating member, for example, ceramics is used. The configuration explained above is a so-called separator-less configuration.

The electrolyte 14 is equivalent to a so-called electrolytic solution. The electrolyte 14 is impregnated in the separator 13. The electrolyte 14 includes an organic solvent, a supporting electrolyte, and an additive. As the organic solvent, for example, carbonic ester is used. As the supporting electrolyte, for example, lithium salt is used.

A charge/discharge body 110 that is a modification of the charge/discharge body 10 is explained with reference to Figure 9. In the charge/discharge body 110, a configuration of a positive electrode 111 is different from the configuration of the positive electrode 11 in the first embodiment. In a configuration of the charge/discharge body 110, the same reference numerals are added to the same components as the components of the charge/discharge body 10 and explanation of the components is omitted. A positive electrode active material layer 111T of the charge/discharge body 110 faces a portion excluding both the ends extending in the latitudinal direction of the current collection section 11a (the Z-axis direction). A heat resistant insulating layer 111U of the charge/discharge body 110 is joined to both the ends extending in the latitudinal direction of the current collection section 11a and a proximal end portion of the positive electrode tab 11b. The heat resistant insulating layer 111U includes, for example, ceramics.

The current collection member 20 is electrically coupled to the charge/discharge body 10. The current collection member 20 shown in Figure 2 to Figure 5, Figure 10, and Figure 12 to Figure 14 includes a positive electrode current collection plate 21 and a negative electrode current collection plate 22.

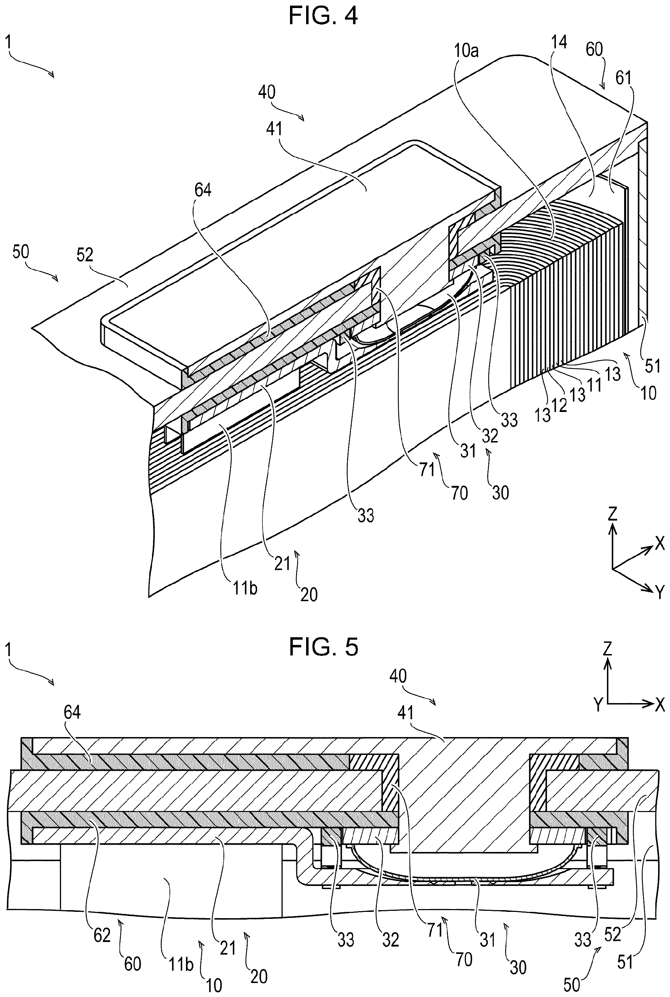

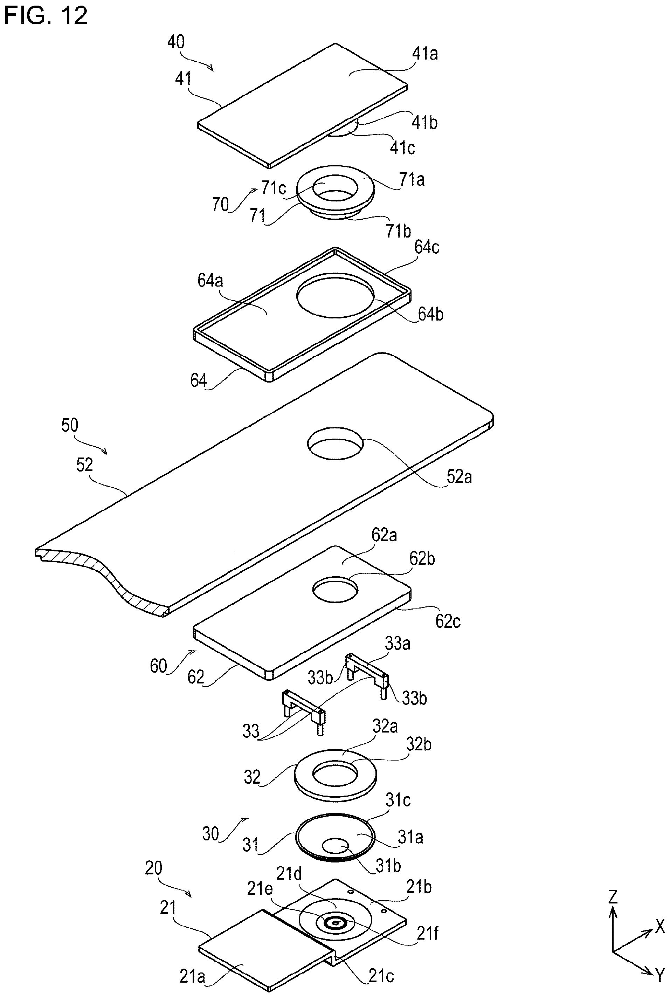

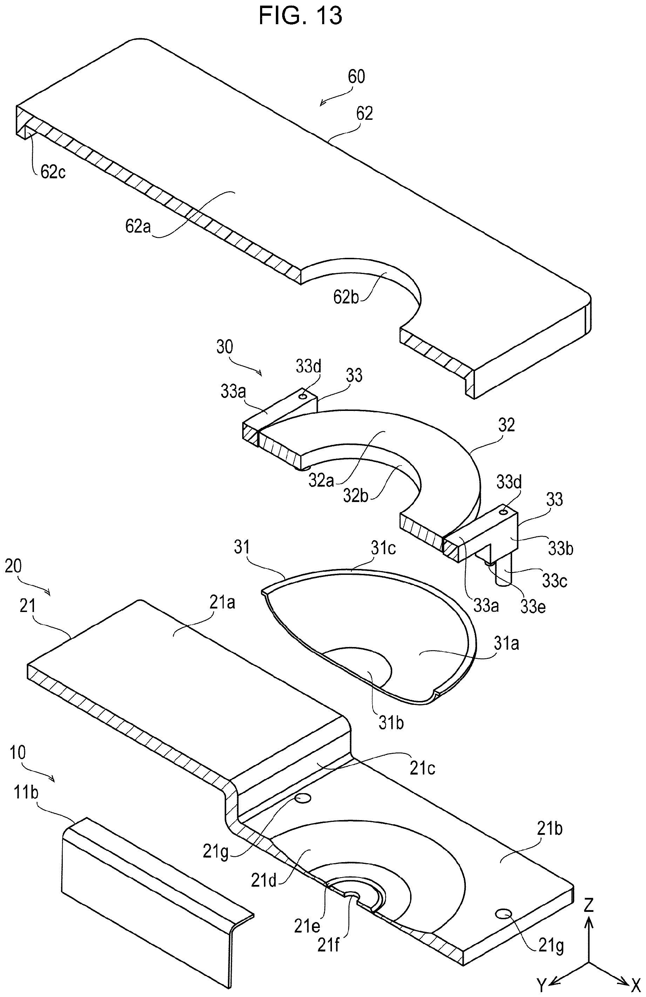

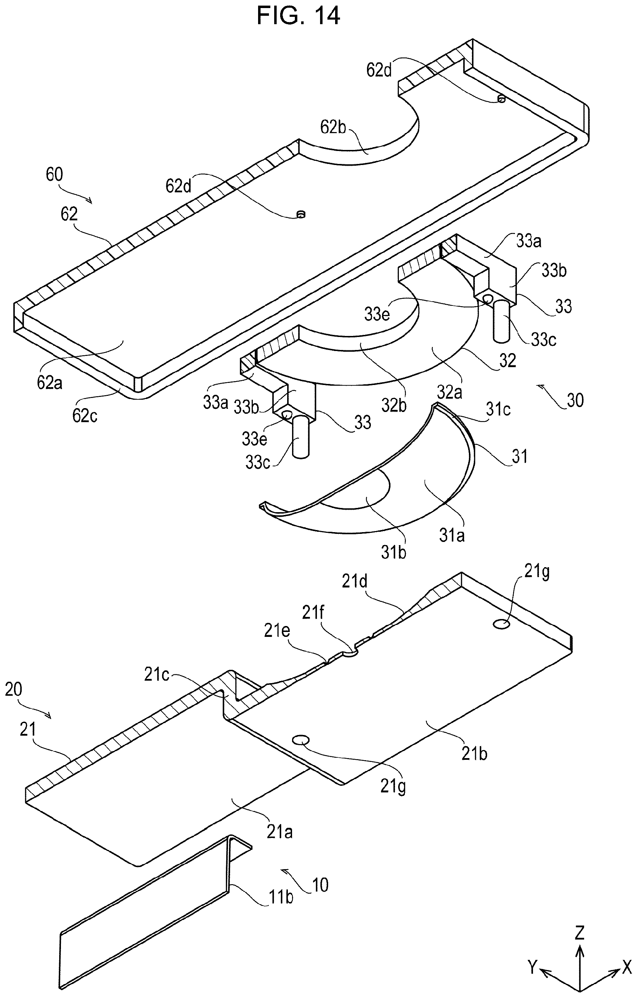

For example, as shown in Figure 4 and Figure 5, the positive electrode current collection plate 21 electrically couples the positive electrode tab 11b of the charge/discharge body 10 and a positive electrode terminal 41 via the current interrupter 30. The positive electrode current collection plate 21 includes, for example, as shown in Figure 12, a rectangular parallelepiped plate-like first base section 21a, a rectangular parallelepiped plate-like second base section 21b, and a coupling section 21c that couples the first base section 21a and the second base section 21b stepwise at different heights. For example, as shown in Figure 13 and Figure 14, a recess 21d where the second base section 21b is formed thin is formed on the upper surface (the surface on the Z-axis positive direction side) of the second base section 21b. The recess 21d is formed in a circular arc shape. For example, as shown in Figure 13 and Figure 14, a fragile section 21e, which is a fragile portion hollowed in a ring shape, is formed at the center of the recess 21d. At a joining section T with a diaphragm 31, the fragile section 21e is formed with stiffness relatively lower than that of the joining section T. For example, as shown in Figure 13 and Figure 14, a through-hole 21f is formed at the center of the recess 21d. The through-hole 21f is formed inside the fragile section 21e at the recess 21d. Through the through-hole 21f, the diaphragm 31 is exposed to a side closer to the charge/discharge body 10. The second base section 21b is formed with a positioning hole 21g into which a positioning pin 33c of a supporting table 33 of the current interrupter 30 is inserted. The positive electrode current collection plate 21 is formed by, for example, aluminum or an aluminum alloy.

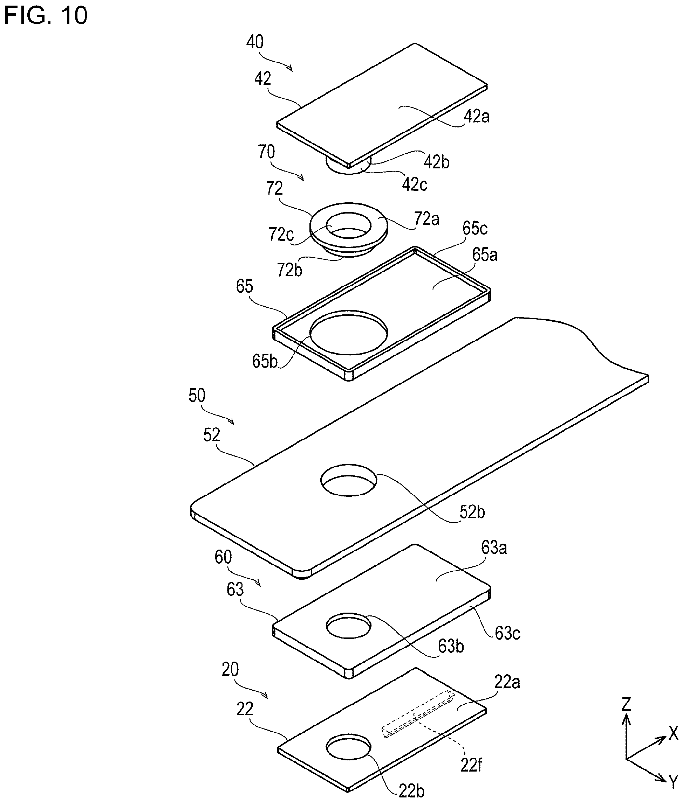

For example, as shown in Figure 2 and Figure 3, the negative electrode current collection plate 22 electrically couples the negative electrode tab 12b of the charge/discharge body 10 and a negative electrode terminal 42. The negative electrode current collection plate 22 includes, for example, as shown in Figure 10, a rectangular parallelepiped plate-like base section 22a and an insertion hole 22b piercing through the base section 22a. An insertion section 42b of the negative electrode terminal 42 is inserted into the insertion hole 22b of the negative electrode current collection plate 22. The negative electrode current collection plate 22 is formed by, for example, copper or a copper alloy.

The current interrupter 30 is coupled to the current collection member 20 and electrically couples the current collection member 20 and the positive electrode terminal 41. The current interrupter 30 shown in Figure 4, Figure 5, and Figure 12 to Figure 14 includes the diaphragm 31, an electrical connection member 32, and a pair of supporting tables 33. The current interrupter 30 may be provided on the negative electrode terminal 42 side.

As shown in Figure 12 to Figure 14, the diaphragm 31 (current interrupt device) is stacked and joined with the positive electrode current collection plate 21. The diaphragm 31 includes, for example, as shown in Figure 13, curved cylindrical main body section 31a, a disk-shaped first joining section 31b provided on the distal end side of the main body section 31a, and a ring-like second joining section 31c provided on the proximal end side of the main body section 31a. The first joining section 31b is joined to the recess 21d of the positive electrode current collection plate 21. The second joining section 31c is joined to the electrical connection member 32. The diaphragm 31 is formed by, for example, aluminum or an aluminum alloy.

As shown in Figure 12 to Figure 14, the electrical connection member 32 is formed in a cylindrical shape. A positive electrode side first insulation plate 62 is joined to the upper surface of the electrical connection member 32. The second joining section 31c of the diaphragm 31 is joined to the peripheral edge of the lower surface of the electrical connection member 32. The electrical connection member 32 is formed by, for example, aluminum or an aluminum alloy.

As shown in Figure 12 to Figure 14, the supporting table 33 (support member) supports the diaphragm 31 in the Z-axis direction equivalent to a stacking direction of the positive electrode current collection plate 21 and the diaphragm 31. The supporting table 33 includes, for example, as shown in Figure 14, rectangular parallelepiped main body sections 33a extending in the latitudinal direction of the battery 1 and a pair of leg sections 33b extending downward from both the sides in the longitudinal direction of the main body sections 33a. One supporting table 33 is provided at each of both the ends in the longitudinal direction of the battery 1 of the diaphragm 31. The main body sections 33a are attached to the positive electrode side first insulation plate 62. The main body sections 33a are formed with positioning holes 33d at both the ends overlapping the pair of leg section 33b. Positioning pins 62d formed at the positive electrode side first insulation plate 62 are inserted into the positioning holes 33d. The leg sections 33b are attached to the second base section 21b of the positive electrode current collection plate 21. Each leg section 33b is formed with the columnar positioning pin 33c extending downward. The positioning pin 33c is inserted into the positioning hole 21g of the positive electrode current collection plate 21.

The supporting table 33 is formed with, for example, as shown in Figure 14, a semispherical projection 33e (low-stiffness member) extending downward from each leg section 33b. The projection 33e is arranged alongside the positioning pin 33c at the leg section 33b. The projection 33e is arranged alongside the supporting table 33 in the Z-axis direction and has stiffness lower than that of the supporting table 33. The projection 33e is formed integrally with the supporting table 33. The projection 33e projects in a semispherical shape from the supporting table 33 toward the positive electrode current collection plate 21. The projection 33e is plastically deformable. The supporting table 33 is formed by, for example, insulating resin.

The external terminal 40 is coupled to the current collection member 20 or the current interrupter 30. The external terminal 40 shown in Figure 1 to Figure 6, Figure 10, and Figure 12 includes the positive electrode terminal 41 and the negative electrode terminal 42.

For example, as shown in Figure 5 the positive electrode terminal 41 is coupled to the electrical connection member 32 of the current interrupter 30. That is, the positive electrode terminal 41 is electrically coupled to the diaphragm 31. The positive electrode terminal 41 includes, for example, as shown in Figure 12, a rectangular parallelepiped plate-like base section 41a, a columnar insertion section 41b projecting downward (in the Z-axis negative direction) from the base section 41a, and a cylindrical joining section 41c projecting downward (in the Z-axis negative direction) from the peripheral edge of the base section 41a.

For example, as shown in Figure 12, the base section 41a is in contact with a base section 64a of a positive electrode side second insulation plate 64. The insertion section 41b is inserted into an insertion hole 64b of the positive electrode side second insulation plate 64, a positive electrode side insertion hole 52a of a lid 52, an insertion hole 62b of the positive electrode side first insulation plate 62, and an insertion hole 32b of the electrical connection member 32.

For example, as shown in Figure 12, the joining section 41c projects downward (in the Z-axis negative direction) from the insertion hole 32b of the electrical connection member 32 and is expanded outward in the radial direction and joined to the electrical connection member 32. That is, the joining section 41c is caulked at the peripheral edge of the insertion hole 32b of the electrical connection member 32. Further, the joining section 41c is welded at the peripheral edge of the insertion hole 32b of the electrical connection member 32. The positive electrode terminal 41 is formed by, for example, aluminum or an aluminum alloy.

For example, as shown in Figure 3, the negative electrode terminal 42 is coupled to the negative electrode current collection plate 22. The negative electrode terminal 42 includes, for example, as shown in Figure 10, a rectangular parallelepiped plate-like base section 42a, the columnar insertion section 42b projecting downward (in the Z-axis negative direction) from the base section 42a, and a cylindrical joining section 42c projecting downward (in the Z-axis negative direction) from the peripheral edge of the base section 42a.

For example, as shown in Figure 10, the base section 42a is in contact with a base section 65a of a negative electrode side second insulation plate 65. The insertion section 42b is inserted into an insertion hole 65b of the negative electrode side second insulation plate 65, a negative electrode side insertion hole 52b of the lid 52, an insertion hole 63b of a negative electrode side first insulation plate 63, and the insertion hole 22b of the negative electrode current collection plate 22.

For example, as shown in Figure 10, the joining section 42c projects downward from the insertion hole 22b of the negative electrode current collection plate 22 and is expanded outward in the radial direction and joined to the negative electrode current collection plate 22. That is, the joining section 42c is caulked at the peripheral edge of the insertion hole 22b of the negative electrode current collection plate 22. Further, the joining section 42c is welded at the peripheral edge of the insertion hole 22b of the negative electrode current collection plate 22. The negative electrode terminal 42 is formed by, for example, copper or a copper alloy.

The constituent members of the battery 1 is housed in or attached to the exterior body 50. The exterior body 50 shown in Figure 1 to Figure 6 and Figure 10 to Figure 12 includes a container 51, the lid 52, and a sealing plug 53.

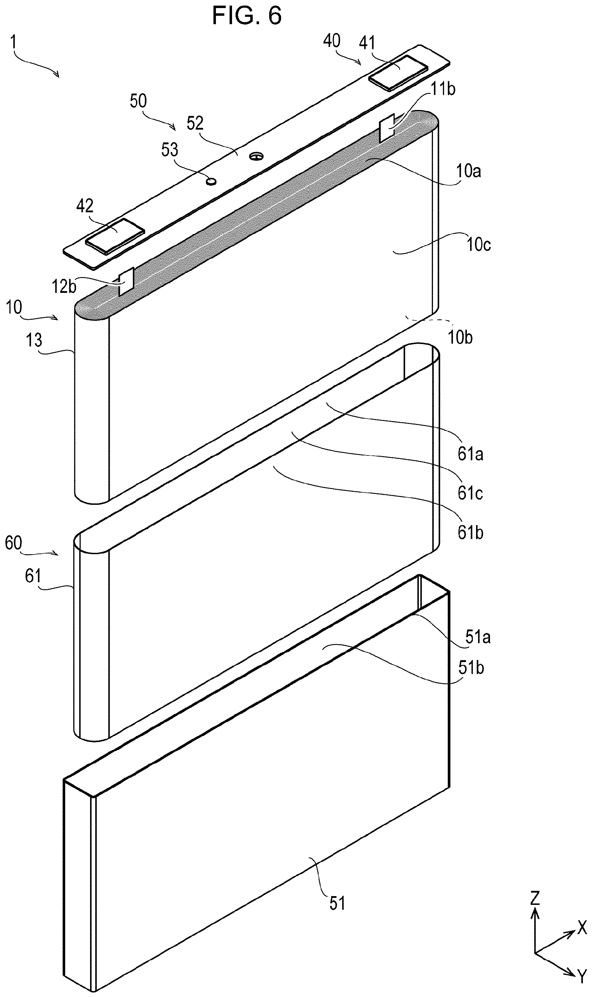

For example, as shown in Figure 2 and Figure 6, the container 51 houses the charge/discharge body 10 and the like covered by an insulation cover 61. The container 51 is configured by a rectangular parallelepiped metal can. The container 51 includes, for example, as shown in Figure 6, an opening 51a opened in the longitudinal direction and an enclosure section 51b stretching to the opening 51a. The container 51 is formed by, for example, aluminum or an aluminum alloy.

For example, as shown in Figure 2 and Figure 6, the lid 52 seals the opening 51a of the container 51. The lid 52 faces, in the charge/discharge body 10, one side section 10a (a side section) adjacent to the positive electrode 11, the separator 13, and the negative electrode 12. The lid 52 is formed by a long plate-like metal plate. In the lid 52, the positive electrode side insertion hole 52a configured by a circular through-hole is formed on one end side in the longitudinal direction. The insertion section 41b of the positive electrode terminal 41 is inserted into the positive electrode side insertion hole 52a. In the lid 52, the negative electrode side insertion hole 52b configured by a circular through-hole is formed on the other end side in the longitudinal direction. The insertion section 42b of the negative electrode terminal 42 is inserted into the negative electrode side insertion hole 52b.

In the lid 52, a liquid injection hole 52c configured by a circular through-hole is formed between the positive electrode side insertion hole 52a and the negative electrode side insertion hole 52b. The electrolyte 14 is injected from the lid 52 toward the container 51 via the liquid injection hole 52c. An insertion section 53b of the sealing plug 53 is inserted into the liquid injection hole 52c. In the lid 52, a cleavage valve 52d is formed in the center in the longitudinal direction. The lid 52 is welded to the container 51. The lid 52 is formed by, for example, aluminum or an aluminum alloy.

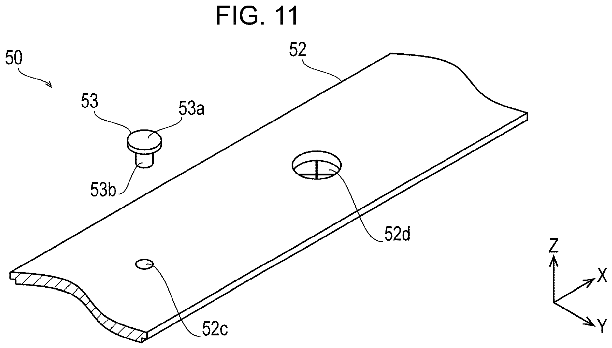

For example, as shown in Figure 11, the sealing plug 53 seals the liquid injection hole 52c of the lid 52. The sealing plug 53 is formed in a columnar shape. The sealing plug 53 includes a head section 53a having a relatively large outer diameter and the insertion section 53b continuous to the head section 53a and having a relatively small outer diameter. The head section 53a of the sealing plug 53 is welded to the lid 52. The sealing plug 53 is formed by, for example, aluminum or an aluminum alloy.

The insulator 60 insulates the constituent members of the battery 1 and the exterior body 50. The insulator 60 shown in Figure 2 to Figure 6, Figure 10, and Figure 12 to Figure 14 includes the insulation cover 61, the positive electrode side first insulation plate 62, the negative electrode side first insulation plate 63, the positive electrode side second insulation plate 64, and the negative electrode side second insulation plate 65.

For example, as shown in Figure 6, the insulation cover 61 covers and insulates the charge/discharge body 10. The insulation cover 61 includes a pair of side surfaces (a first side surface 61a and a second side surface 61b) facing each other and an opening 61c that exposes the one side section 10a of the charge/discharge body 10 between the first side surface 61a (one of the side surfaces) and the second side surface 61b (the other side surface). The insulation cover 61 covers surfaces other than one surface of the one side section 10a of the charge/discharge body 10. That is, the insulation cover 61 covers the other side section 10b facing the one side section 10a of the charge/discharge body 10 and an outer circumferential section 10c located between the one side section 10a and the other side section 10b of the charge/discharge body 10. The insulation cover 61 is formed in a pentahedron shape by folding a polyhedral sheet in a box shape. The insulation cover 61 is formed by, for example, polypropylene.

For example, as shown in Figure 5, the positive electrode side first insulation plate 62 insulates the positive electrode current collection plate 21 and the electrical connection member 32 from the lid 52. The positive electrode side first insulation plate 62 includes, for example, as shown in Figure 12, a rectangular parallelepiped plate-like base section 62a, the insertion hole 62b piercing through the base section 62a, and a projection 62c surrounding the side edge of the base section 62a in an annular shape and projecting in a direction away from the lid 52. The positive electrode side first insulation plate 62 includes, as shown in Figure 14, the positioning pins 62d projecting downward from the base section 62a. The positioning pins 62d are inserted into the positioning holes 33d of the supporting table 33 shown in Figure 13. In the positive electrode side first insulation plate 62, the positive electrode current collection plate 21, the electrical connection member 32, and the like are housed in a space formed by the base section 62a and the projection 62c. The insertion section 41b of the positive electrode terminal 41 is inserted into the insertion hole 62b. The positive electrode side first insulation plate 62 is formed by, for example, insulating resin.

For example, as shown in Figure 3, the negative electrode side first insulation plate 63 insulates the negative electrode current collection plate 22 and the lid 52. The negative electrode side first insulation plate 63 includes, for example, as shown in Figure 10, a rectangular parallelepiped plate-like base section 63a, the insertion hole 63b piercing through the base section 63a, and a projection 63c surrounding the side edge of the base section 63a in an annular shape and projecting in a direction away from the lid 52. In the negative electrode side first insulation plate 63, the negative electrode current collection plate 22 is housed in a space formed by the base section 63a and the projection 63c. The insertion section 42b of the negative electrode terminal 42 is inserted into the insertion hole 63b. The negative electrode side first insulation plate 63 is formed by, for example, insulating resin.

For example, as shown in Figure 5, the positive electrode side second insulation plate 64 insulates the positive electrode terminal 41 and the lid 52. For example, as shown in Figure 12, the positive electrode side second insulation plate 64 includes the rectangular parallelepiped plate-like base section 64a, the insertion hole 64b piercing through the base section 64a, and a projection 64c surrounding the side edge of the base section 64a in an annular shape and projecting in a direction away from the lid 52. In the positive electrode side second insulation plate 64, the positive electrode terminal 41 is housed in a space formed by the base section 64a and the projection 64c. The insertion section 41b of the positive electrode terminal 41 is inserted into the insertion hole 64b. The positive electrode side second insulation plate 64 is formed by, for example, insulating resin.

For example, as shown in Figure 3, the negative electrode side second insulation plate 65 insulates the negative electrode terminal 42 and the lid 52. The negative electrode side second insulation plate 65 includes, for example, as shown in Figure 10, the rectangular parallelepiped plate-like base section 65a, the insertion hole 65b piercing through the base section 65a, and a projection 65c surrounding the side edge of the base section 65a in an annular shape and projecting in a direction away from the lid 52. In the negative electrode side second insulation plate 65, the negative electrode terminal 42 is housed in a space formed by the base section 65a and the projection 65c. The insertion section 42b of the negative electrode terminal 42 is inserted into the insertion hole 65b. The negative electrode side second insulation plate 65 is formed by, for example, insulating resin.

The sealing body 70 seals the constituent members of the battery 1 and the exterior body 50. The sealing body 70 shown in Figure 2 to Figure 5, Figure 10, and Figure 12 includes a positive electrode side gasket 71 and a negative electrode side gasket 72.

For example, as shown in Figure 5, the positive electrode side gasket 71 insulates the positive electrode side second insulation plate 64 and the lid 52. The positive electrode side gasket 71 is formed in a cylindrical shape. The positive electrode side gasket 71 includes, for example, as shown in Figure 12, a first insertion section 71a having a relatively large outer diameter, a second insertion section 71b continuous to the first insertion section 71a and having a relatively small outer diameter, and an insertion hole 71c piercing through the first insertion section 71a and the second insertion section 71b. The first insertion section 71a of the positive electrode side gasket 71 is inserted into the insertion hole 64b of the positive electrode side second insulation plate 64. The second insertion section 71b of the positive electrode side gasket 71 is inserted into the positive electrode side insertion hole 52a of the lid 52. The insertion section 41b of the positive electrode terminal 41 is inserted into the insertion hole 71c. The positive electrode side gasket 71 is formed by, for example, rubber having insulation and elasticity.

For example, as shown in Figure 3, the negative electrode side gasket 72 insulates the negative electrode side second insulation plate 65 and the lid 52. The negative electrode side gasket 72 is formed in a cylindrical shape. The negative electrode side gasket 72 includes, for example, as shown in Figure 10, a first insertion section 72a having a relatively large outer diameter, a second insertion section 72b continuous to the first insertion section 72a and having a relatively small outer diameter, and an insertion hole 72c piercing through the first insertion section 72a and the second insertion section 72b. The first insertion section 72a of the negative electrode side gasket 72 is inserted into the insertion hole 65b of the negative electrode side second insulation plate 65. The second insertion section 72b of the negative electrode side gasket 72 is inserted into the negative electrode side insertion hole 52b of the lid 52. The insertion section 42b of the negative electrode terminal 42 is inserted into the insertion hole 72c. The negative electrode side gasket 72 is formed by, for example, rubber having insulation and elasticity.

### (Manufacturing method for battery 1 in first embodiment)

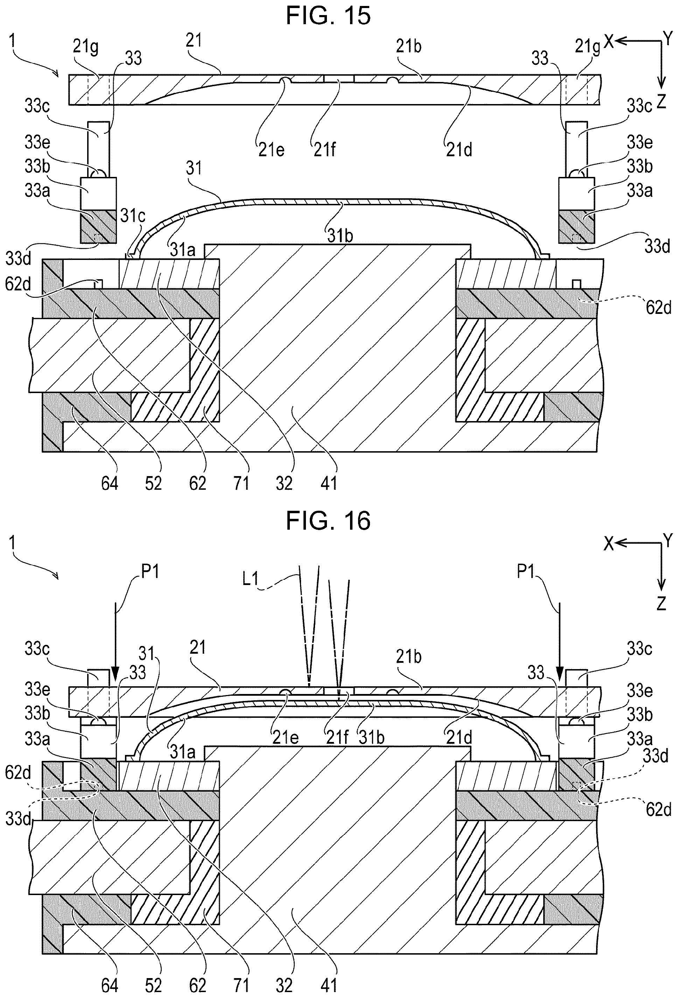

A manufacturing method for the battery 1 is explained with reference to Figure 15 to Figure 19. In the manufacturing method for the battery 1, only a manufacturing method specific to the battery 1 in the first embodiment is explained. The manufacturing method specific to the battery 1 in the first embodiment is a manufacturing method equivalent to a first step, a second step, and a third step.

In a state before the first step, as shown in Figure 15, the positive electrode current collection plate 21 and the diaphragm 31 are separated and not joined.

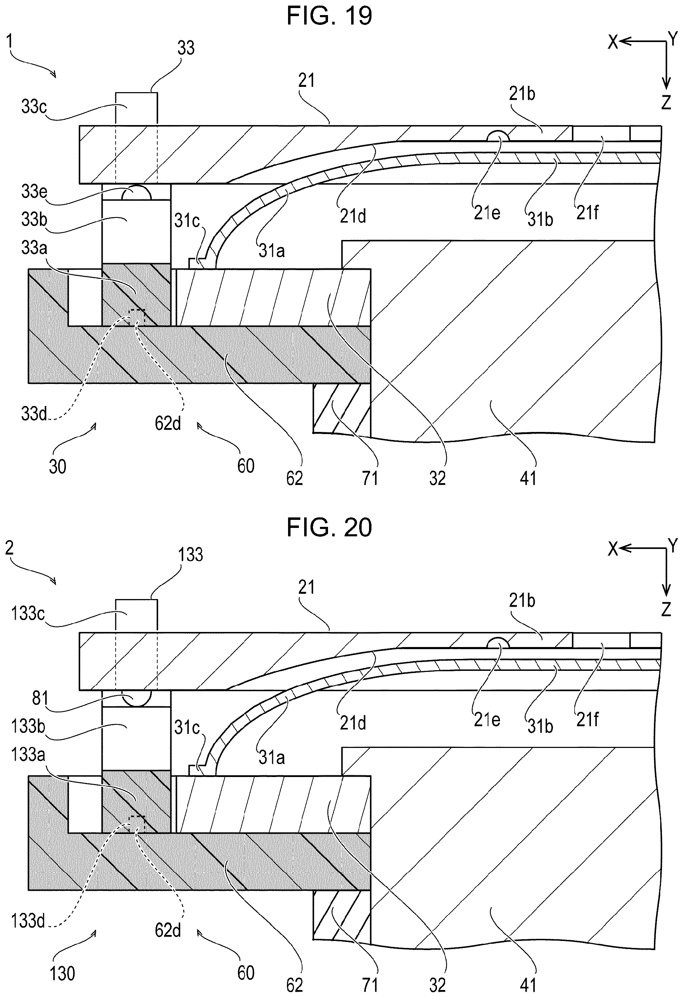

Before the first step, as shown in Figure 16 and Figure 19, the pair of supporting tables 33 are attached to the positive electrode side first insulation plate 62. The positioning pins 62d of the positive electrode side first insulation plate 62 are inserted into the positioning holes 33d of each supporting table 33.

In addition, before the first step, as shown in Figure 16 and Figure 19, the positive electrode current collection plate 21 and the diaphragm 31 are brought close to each other. Specifically, before the first step, pressing force P1 toward the diaphragm 31 is input to the positive electrode current collection plate 21. The positive electrode current collection plate 21 moves closer to the diaphragm 31 compared with the state shown in Figure 15. As a result, the positioning pin 33c of the supporting table 33 is inserted into the positioning hole 21g of the positive electrode current collection plate 21. Further, the positive electrode current collection plate 21 contacts the projection 33e of the supporting table 33.

In the first step, as shown in Figure 16, the relative distance between the positive electrode current collection plate 21 and the diaphragm 31 is measured. Specifically, in the first step, the surface of the positive electrode current collection plate 21 is irradiated with a laser beam L1 near the through-hole 21f of the diaphragm 31. The position of the surface of the positive electrode current collection plate 21 is measured by measuring reflected light of the laser beam L1. Similarly, in the first step, the surface of the diaphragm 31 is irradiated with the laser beam L1 via the through-hole 21f of the diaphragm 31 from a side on which the charge/discharge body 10 is disposed. The position of the surface of the diaphragm 31 is measured by measuring reflected light of the laser beam L1. Subsequently, the distance (C = A - B) from the positive electrode current collection plate 21 to the diaphragm 31 is calculated based on the difference (A) between the position of the surface of the positive electrode current collection plate 21 and the position of the surface of the diaphragm 31 and the known thickness (B) of the positive electrode current collection plate 21. The distance (C = A - B) from the positive electrode current collection plate 21 to the diaphragm 31 is equivalent to the gap between the positive electrode current collection plate 21 and the diaphragm 31. In this manner, the relative distance (C = A - B) between the positive electrode current collection plate 21 and the diaphragm 31 in the Z-axis direction at the joining section T is measured.

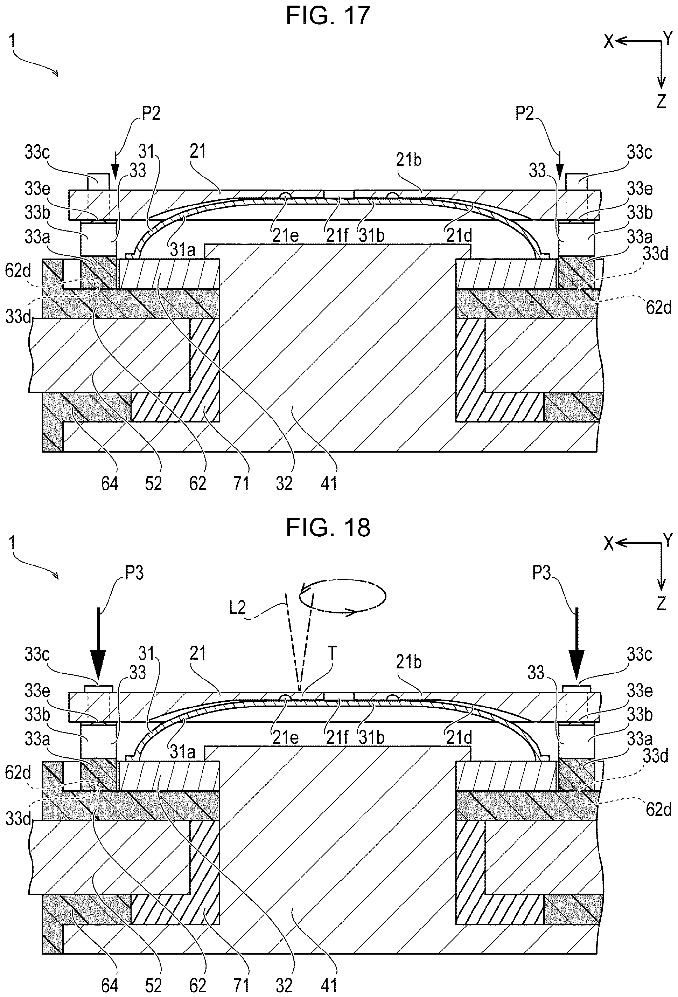

In the second step, as shown in Figure 17, each supporting table 33 and the positive electrode current collection plate 21 are brought relatively close to each other in the Z-axis direction to press the projection 33e of the supporting table 33 and the positive electrode current collection plate 21. The second step is performed simultaneously with the first step or after the first step. Specifically, in the second step, pressing force P2 toward the supporting table 33 is input to the positive electrode current collection plate 21. As a result, the positive electrode current collection plate 21 and the supporting table 33 move relatively closer to each other in the Z-axis direction compared with the state shown in Figure 16 and the positive electrode current collection plate 21 and the projection 33e are strongly pressed to each other. The projection 33e of the supporting table 33 has stiffness lower than those of the positive electrode current collection plate 21 and the other part of the supporting table 33. Accordingly, as shown in Figure 17, the projection 33e is pressed by the positive electrode current collection plate 21 and the other part of the supporting table 33 and plastically deformed. As explained above, in the first step before the second step, the relative distance between the positive electrode current collection plate 21 and the diaphragm 31 is measured. Thus, the relative distance between the positive electrode current collection plate 21 and the diaphragm 31 is adjusted by adjusting the amount of plastic deformation of the projection 33e. Specifically, the positive electrode current collection plate 21 and the diaphragm 31 move relatively closer to each other as the projection 33e is plastically deformed. Thus, the projection 33e is plastically deformed to eliminate the distance (C = A - B) from the positive electrode current collection plate 21 to the diaphragm 31, that is, the gap between the positive electrode current collection plate 21 and the diaphragm 31. In this manner, the positive electrode current collection plate 21 and the diaphragm 31 are set to the contacting state shown in Figure 17 from the separated state shown in Figure 16 and Figure 19.

Before the third step, as shown in Figure 18, the positive electrode current collection plate 21 and each supporting table 33 are joined. Specifically, before the third step, the distal end of each positioning pin 33c of the pair of supporting tables 33 is heated to soften the distal end. Simultaneously, pressing force P3 is input from the distal end of the positioning pin 33c toward the positive electrode current collection plate 21. As a result, the distal end of the positioning pin 33c is plastically deformed toward the positive electrode current collection plate 21. The positive electrode current collection plate 21 is sandwiched by the distal end of each positioning pin 33c and each leg section 33b. Thereafter, the heating of the distal end of each positioning pin 33c is stopped to harden the distal end of the positioning pin 33c. In this manner, the positive electrode current collection plate 21 and the supporting tables 33 are joined.

In the third step, as shown in Figure 18, the positive electrode current collection plate 21 and the diaphragm 31 are joined. The third step is performed after the second step. Specifically, in the third step, the joining section T of the positive electrode current collection plate 21 and the diaphragm 31 in contact with each other is laser-welded by using, for example, a laser beam L2.

### (Effects of battery 1 and manufacturing method for battery 1 in first embodiment)

Effects of the battery 1 and the manufacturing method for the battery 1 are explained.

In the battery 1, each projection 33e is arranged alongside the corresponding supporting table 33 in the Z-axis direction and has stiffness lower than that of the supporting table 33. In the manufacturing method for the battery 1, in the first step, the distance between the positive electrode current collection plate 21 and the diaphragm 31 is measured in the Z-axis direction. In the second step, the supporting table 33 and the positive electrode current collection plate 21 are brought relatively close to in the Z-axis direction to press the projection 33e and the positive electrode current collection plate 21. In the third step after the second step, the positive electrode current collection plate 21 and the diaphragm 31 in contact with each other are joined. With the battery 1 having the configuration explained above and the manufacturing method for the battery 1, it is possible to absorb manufacturing error of the constituent members of the battery 1 by deforming the projection 33e in accordance with the manufacturing error of the constituent members of the battery 1. The constituent members of the battery 1 are, for example, the positive electrode current collection plate 21 and the diaphragm 31. The diaphragm 31 and the like can be joined to the positive electrode current collection plate 21 in a state in which predetermined shapes are maintained. Thus, in the battery 1, it is possible to achieve actuation pressure of the diaphragm 31 in a certain range without influence of manufacturing error of the constituent members. That is, the diaphragm 31 as a current interrupt device can be actuated with appropriate actuation pressure. Thus, reliability of the battery 1 can be improved. Moreover, in the manufacturing method for the battery 1, it is possible to sufficiently join the positive electrode current collection plate 21 and the diaphragm 31 without influence of manufacturing error of the constituent members of the battery 1. Thus, productivity of the battery 1 including the diaphragm 31 can be improved.

The projection 33e is formed integrally with the supporting table 33 and projects from the supporting table 33 toward the positive electrode current collection plate 21. The projection 33e is plastically deformable. With the battery 1 having the configuration explained above, it is possible to achieve the projection 33e with a simple configuration. The projection 33e may be formed integrally with the positive electrode current collection plate 21.

The positive electrode current collection plate 21 is formed with the through-hole 21f through which the diaphragm 31 is exposed to the side closer to the charge/discharge body 10. In the first step, the relative distance between the positive electrode current collection plate 21 and the diaphragm 31 at the joining section T is measured via the through-hole 21f of the positive electrode current collection plate 21 from the side on which the charge/discharge body 10 is disposed. With the battery 1 having the configuration explained above and the manufacturing method for the battery 1, it is possible to easily measure the relative distance between the positive electrode current collection plate 21 and the diaphragm 31 at the joining section T with a simple configuration that uses the through-hole 21f formed at the positive electrode current collection plate 21. Thus, productivity of the battery 1 can be improved.

The positive electrode current collection plate 21 is formed with the fragile section 21e having stiffness relatively lower than that of the joining section T around the joining section T of the positive electrode current collection plate 21 and the diaphragm 31. In the manufacturing method for the battery 1, the positive electrode current collection plate 21 formed with the fragile section 21e is used. With the battery 1 having the configuration explained above and the manufacturing method for the battery 1, it is possible to reduce a load input to the fragile section 21e and the joining section T by actively deforming the projection 33e when joining the current collection member 20 and the diaphragm 31. That is, it is possible to prevent damage on the fragile section 21e and the joining section T at manufacturing of the battery 1. Thus, in the battery 1, it is possible to achieve actuation pressure of the diaphragm 31 in a certain range. That is, the diaphragm 31 can appropriately function as a current interrupt device. Moreover, in the manufacturing method for the battery 1, it is possible to sufficiently join the current collection member 20 and the diaphragm 31 while reducing a load input to the fragile section 21e and the joining section T. Thus, productivity of the battery 1 can be improved.

### [Second embodiment]

### (Configuration of battery 2 in second embodiment)

A configuration of a battery 2 in a second embodiment is explained with reference to Figure 20.

Unlike the battery 1 in the first embodiment, in the battery 2 in the second embodiment, a projection 81 (low-stiffness member) is formed separately from a supporting table 133 (support member). In the battery 2 in the second embodiment, the same reference numerals are added to the same components as the components of the battery 1 in the first embodiment and explanation of the components is omitted. In the second embodiment, components different from the components in the first embodiment are mainly explained.

As shown in Figure 20, the supporting table 133 has the same configuration as the supporting table 33 except that the projection 81 is not formed. The supporting table 133 includes a main body section 133a, a pair of leg sections 133b, pin 133c, and a positioning hole 133d.

As shown in Figure 20, the projection 81 is formed separately from the supporting table 133. The projection 81 is provided between the supporting table 133 and the positive electrode current collection plate 21. The projection 81 is attached to, for example, the positive electrode current collection plate 21. The projection 81 projects in a semispherical shape from the positive electrode current collection plate 21 toward a leg section 133b. The projection 81 is plastically deformable. The projection 81 has stiffness lower than those of the positive electrode current collection plate 21 and the leg section 33b. The projection 81 is formed by, for example, dropping liquid resin onto the positive electrode current collection plate 21 and then curing the resin. In this case, the projection 81 is made of, for example, a resin member in a semispherical shape.

### (Manufacturing method for battery 2 in second embodiment)

A manufacturing method for the battery 2 is the same as the manufacturing method for the battery 1 in the first embodiment. However, in the second step, the projection 81 is pressed by the leg section 133b of the supporting table 133 and the positive electrode current collection plate 21 and plastically deformed. As a result, the positive electrode current collection plate 21 and the diaphragm 31 are in contact with each other.

### (Effects of battery 2 in second embodiment)

Effects of the battery 2 in the second embodiment are explained.

The projection 81 is formed separately from the supporting table 133 and the positive electrode current collection plate 21. The projection 81 is plastically deformable. In the battery 2 having the configuration explained above, the projection 81 can be achieved with a simple configuration. That is, with the battery 2, similarly to the battery 1 in the first embodiment, it is possible to absorb manufacturing error of the constituent members of the battery 2 by deforming the projection 81 in accordance with the manufacturing error of the constituent members of the battery 2. In a state in which a predetermined shape is maintained, the diaphragm 31 can be joined to the positive electrode current collection plate 21. In a state in which predetermined shapes are maintained, the diaphragm 31 and the like can be joined to the positive electrode current collection plate 21. Thus, it is possible to achieve actuation pressure of the diaphragm 31 in a certain range without influence of manufacturing error of the constituent members of the battery 2. That is, the diaphragm 31 can appropriately function as a current interrupt device. The projection 81 is attached to, for example, the positive electrode current collection plate 21. The projection 81 may be attached to the supporting table 133.

### [Third embodiment]

### (Configuration of battery 3 in third embodiment)

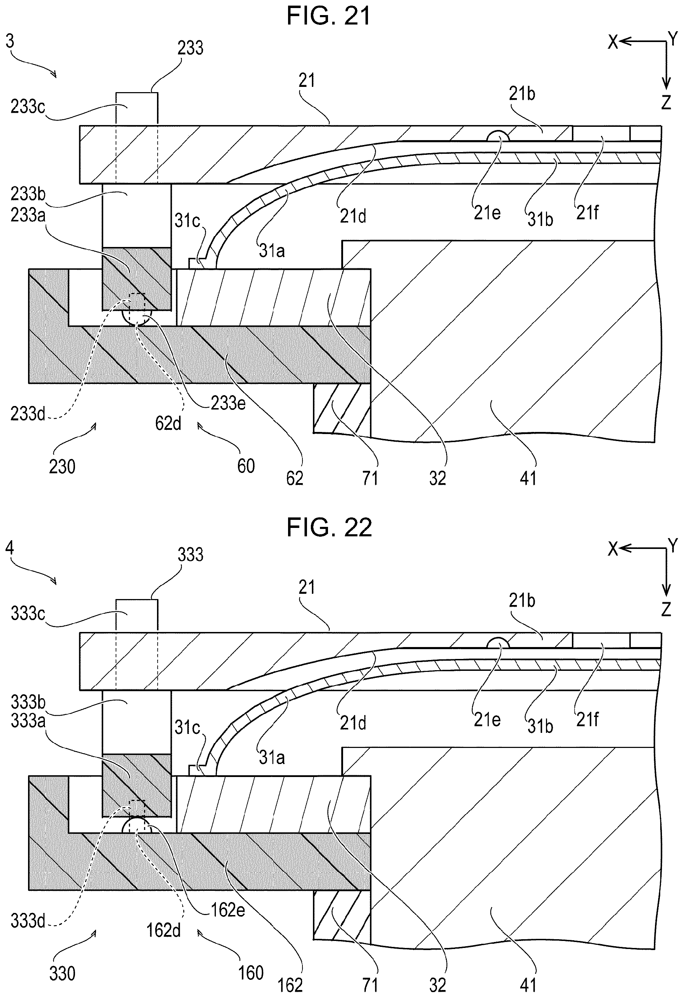

A configuration of a battery 3 in a third embodiment is explained with reference to Figure 21.

Unlike the battery 1 in the first embodiment, in the battery 3 in the third embodiment, a projection 233e (low-stiffness member) projects from a supporting table 233 (support member) toward a side opposite the positive electrode current collection plate 21. In the battery 3 in the third embodiment, the same reference numerals are added to the same components as the components of the battery 1 in the first embodiment and explanation of the components is omitted. In the third embodiment, components different from the components in the first embodiment are mainly explained.

As shown in Figure 21, the supporting table 233 has the same configuration as the supporting table 33 except that the projection 233e projects from the supporting table 233 toward the side opposite the positive electrode current collection plate 21. The supporting table 233 includes a main body section 233a, a pair of leg sections 233b, a positioning pin 233c, a positioning hole 233d, and the projection 233e.

The projection 233e is formed integrally with the supporting table 233. The projection 233e projects from the supporting table 233 toward the side opposite the positive electrode current collection plate 21. The projection 233e projects in a semispherical shape from the supporting table 233 toward the positive electrode side first insulation plate 62. The projection 233e is plastically deformable. The projection 233e has stiffness lower than those of the positive electrode current collection plate 21 and the main body section 233a. The projection 233e is sandwiched between the supporting table 233 and the positive electrode side first insulation plate 62.

### (Manufacturing method for battery 3 in third embodiment)

A manufacturing method for the battery 3 is the same as the manufacturing method for the battery 1 in the first embodiment. However, in the second step, the projection 233e is pressed by the main body section 233a of the supporting table 233 and the positive electrode side first insulation plate 62 and plastically deformed. As a result, the positive electrode current collection plate 21 and the diaphragm 31 are in contact with each other.

### (Effects of battery 3 in third embodiment)

Effects of the battery 3 in the third embodiment are explained.

The projection 233e projects from the supporting table 233 toward the side opposite the positive electrode current collection plate 21. The projection 233e is plastically deformable. With the battery 3 having the configuration explained above, similarly to the battery 1 in the first embodiment, it is possible to absorb manufacturing error of the constituent members of the battery 3 by deforming the projection 233e in accordance with the manufacturing error of the constituent members of the battery 3. In a state in which predetermined shapes are maintained, the diaphragm 31 and the like can be joined to the positive electrode current collection plate 21. Thus, it is possible to achieve actuation pressure of the diaphragm 31 in a certain range without influence of manufacturing error of the constituent members of the battery 3. That is, the diaphragm 31 can appropriately function as a current interrupt device.

### [Fourth embodiment]

### (Configuration of battery 4 in fourth embodiment)

A configuration of a battery 4 in a fourth embodiment is explained with reference to Figure 22.

Unlike the battery 3 in the third embodiment, in the battery 4 in the fourth embodiment, a projection 162e (low-stiffness member) is formed on a positive electrode side first insulation plate 162 (cover member). In the battery 4 in the fourth embodiment, the same reference numerals are added to the same components as the components of the battery 3 in the third embodiment and the like and explanation of the components is omitted. In the fourth embodiment, components different from the components in the third embodiment, are mainly explained.

As shown in Figure 22, a supporting table 333 (support member) has the same configuration as the supporting table 33 except that the projection 162e is not integrally formed. The supporting table 333 includes a main body section 333a, a pair of leg sections 333b, a positioning pin 333c, and a positioning hole 333d.

As shown in Figure 22, the positive electrode side first insulation plate 162 has the same configuration as the positive electrode side first insulation plate 62 except that the projection 162e is formed. The positive electrode side first insulation plate 162 includes a positioning pin 162d and the like. The projection 162e projects in a semispherical shape from the positive electrode side first insulation plate 162 toward the supporting table 333. The projection 162e is plastically deformable. The projection 162e has stiffness lower than those of the other part of the positive electrode side first insulation plate 162 and the main body section 333a. The projection 162e is sandwiched between the main body section 333a of the supporting table 333 and the positive electrode side first insulation plate 162.

### (Manufacturing method for battery 4 in fourth embodiment)

A manufacturing method for the battery 4 is the same as the manufacturing method for the battery 1 in the first embodiment. However, in the second step, the projection 162e is pressed by the main body section 333a of the supporting table 333 and the positive electrode side first insulation plate 62 and plastically deformed. As a result, the positive electrode current collection plate 21 and the diaphragm 31 are in contact with each other.

### (Effects of battery 4 in fourth embodiment)

Effects of the battery 4 in the fourth embodiment are explained.

The projection 162e is formed on the positive electrode side first insulation plate 162. The projection 162e is plastically deformable. With the battery 4 having the configuration explained above, similarly to the battery 3 in the third embodiment, it is possible to absorb manufacturing error of the constituent members of the battery 4 by plastically deforming the projection 162e in accordance with the manufacturing error of the constituent members of the battery 4. In a state in which predetermined shapes are maintained, the diaphragm 31 and the like can be joined to the positive electrode current collection plate 21. Thus, it is possible to achieve actuation pressure of the diaphragm 31 in a certain range without influence of manufacturing error of the constituent members of the battery 4. That is, the diaphragm 31 can appropriately function as a current interrupt device.

The battery of the present invention is not limited to the configurations described in the embodiments and can be configured as appropriate based on the contents described in the claims.

The battery of the present invention is not limited to a lithium ion battery. The battery of the present invention can be applied to, for example, a nickel hydrogen battery and a lead battery. The battery of the present invention is not limited to a secondary battery. The battery of the present invention can be applied to a primary battery. The battery of the present invention is not limited to a configuration in which a charge/discharge body is sealed with a container and a lid. The battery of the present invention can be applied to a configuration in which a charge/discharge body is sealed with a laminate film. Each of the embodiments is explained in detail or simply in order to clearly explain the present invention and does not always need to include all the components explained above and may include not-shown components. A part of components in a certain embodiment may be deleted, substituted by components in other embodiments, or combined with components in the other embodiments.

### Reference Signs List

1, 2, 3, 4 battery, 10 charge/discharge body, 20 current collection member, 21 positive electrode current collection plate (current collection member), 21e fragile section, 21f through-hole, 30 current interrupter, 31 diaphragm (current interrupt device), 33 supporting table (support member), 33e projection (low-stiffness member), 41 positive electrode terminal (external terminal), 62 positive electrode side first insulation plate (cover member), 81 projection (low-stiffness member), 162e projection (low-stiffness member), 133 supporting table (support member), 233 supporting table (support member), 233e projection (low-stiffness member), 333 supporting table (support member), T joining section.

## Claims

1. A battery comprising:
a charge/discharge body;
a current collection member electrically coupled to the charge/discharge body;
a current interrupt device stacked and joined with the current collection member;
an external terminal electrically coupled to the current interrupt device;
a support member supporting the current interrupt device in a stacking direction of the current collection member and the current interrupt device; and
a low-stiffness member arranged alongside the support member in the stacking direction and having stiffness lower than stiffness of the support member.

2. The battery according to claim 1, wherein the low-stiffness member
is formed integrally with at least one of the support member and the current collection member,
projects from the support member toward the current collection member, and
is plastically deformable.

3. The battery according to claim 1, wherein the low-stiffness member
is formed separately from at least one of the support member and the current collection member,
is provided between the support member and the current collection member, and
is plastically deformable.

4. The battery according to claim 1, wherein the low-stiffness member
is formed integrally with or separately from the support member,
is provided on a side opposite the current collection member from the support member,
is plastically deformable, and
further includes a cover member sandwiching the low-stiffness member together with the support member.

5. The battery according to any one of claims 1 to 4, wherein the current collection member is formed with a through-hole through which the current interrupt device is exposed to a side closer to the charge/discharge body.

6. The battery according to any one of claims 1 to 5, wherein at least one of the current collection member and the current interrupt device is formed with a fragile section around a joining section of the current collection member and the current interrupt device, the fragile section having stiffness relatively lower than stiffness of the joining section.

7. A manufacturing method for a battery including:
a charge/discharge body;
a current collection member electrically coupled to the charge/discharge body;
a current interrupt device stacked and joined with the current collection member;
an external terminal electrically coupled to the current interrupt device;
a support member supporting the current interrupt device in a stacking direction of the current collection member and the current interrupt device; and
a low-stiffness member arranged alongside the support member in the stacking direction and having stiffness lower than stiffness of the support member,
the manufacturing method comprising:
a first step of measuring distance between the current collection member and the current interrupt device in the stacking direction;
a second step of bringing the support member and the current collection member relatively close to each other in the stacking direction and pressing the low-stiffness member and the current collection member simultaneously with the first step or after the first step; and
a third step of joining the current collection member and the current interrupt device in contact with each other after the second step.

8. The manufacturing method for the battery according to claim 7, wherein
the current collection member is formed with a through-hole through which the current interrupt device is exposed to a side closer to the charge/discharge body, and
in the first step, relative distance between the current collection member and the current interrupt device at a joining section is measured via the through-hole from a side on which the charge/discharge body is disposed.

9. The manufacturing method for the battery according to claim 7 or 8, wherein the current collection member or the current interrupt device formed with a fragile section around a joining section of the current collection member and the current interrupt device is used, the fragile section having stiffness relatively lower than stiffness of the joining section.
